# EUROPEAN PATENT APPLICATION

(11) **EP 4 134 843 A2**
(43) Date of publication of application: **15.02.2023**
(21) Application number: 22206921.3
(22) Date of filing: 11.11.2022
(51) Int. Cl.: G06F 18/25, G06V 20/54

(54) **FUSION AND ASSOCIATION METHOD AND APPARATUS FOR TRAFFIC OBJECTS IN DRIVING ENVIRONMENT, AND EDGE COMPUTING DEVICE**

(30) Priority: 12.11.2021 CN 202111337132
(71) Applicant: Apollo Intelligent Connectivity (Beijing) Technology Co., Ltd., Beijing 100176 (CN)
(72) Inventor: CAO, Huo, BEIJING, 100176 (CN)
(74) Representative: Laqua, Bernd Christian Kurt

(57) **Abstract**

The present disclosure provides a fusion and association method and apparatus for traffic objects in a driving environment, and an edge computing device, and relates to intelligent transportation technologies and autonomous driving technologies. The method includes: obtaining first environmental information and second environmental information, where the first environmental information and the second environmental information are acquired by different sensors; determining, based on the first environmental information, information about a first lane of a first traffic object in the first environmental information, and determining, based on the second environmental information, information about a second lane of a second traffic object in the second environmental information; and determining, based on information about the first traffic object in the first environmental information, information about the second traffic object in the second environmental information, the information about the first lane, and the information about the second lane, whether the first traffic object and the second traffic object have an association relationship. According to the solution provided by the present disclosure, whether the traffic objects have an association relationship can be determined based on information about lanes of the traffic objects, thereby improving the accuracy of fusion and association of the traffic objects.

## Description

### TECHNICAL FIELD

The present disclosure relates to intelligent transportation technologies and autonomous driving technologies in computer technology, and in particular, to a fusion and association method and apparatus for traffic objects in a driving environment, and an edge computing device.

### BACKGROUND

With the rapid development of social economy, the number and types of motor vehicles are also increasing rapidly. During acquisition of a road environment, it is required to associate and fuse object information obtained from different sources.

To associate objects from different sources, horizontal and vertical Euclidean distances or Mahalanobis distances between a target object and an object to be associated is usually calculated. When the horizontal and vertical Euclidean distance or Mahalanobis distance between the target object and the object to be associated satisfies a preset condition, the target object is associated with the object to be associated.

However, different sensors acquire the road environment from different angles, and obtain vehicle information with different angles of view. Due to the angle-of-view difference, misassociation easily occurs when whether the objects are to be associated is determined only based on the distance between the objects.

### SUMMARY

The present disclosure provides a fusion and association method and apparatus for traffic objects in a driving environment, and an edge computing device, so as to solve the problem of object misassociation that easily occurs in the prior art.

According to a first aspect of the present disclosure, there is provided a fusion and association method for traffic objects in a driving environment, including:
obtaining first environmental information and second environmental information, where the first environmental information and the second environmental information are acquired by different sensors;
determining, based on the first environmental information, information about a first lane of a first traffic object in the first environmental information, and determining, based on the second environmental information, information about a second lane of a second traffic object in the second environmental information; and
determining, based on information about the first traffic object in the first environmental information, information about the second traffic object in the second environmental information, the information about the first lane, and the information about the second lane, whether the first traffic object and the second traffic object have an association relationship, where the first traffic object and the second traffic object having the association relationship are a same traffic object.

According to a second aspect of the present disclosure, there is provided a fusion and association apparatus for traffic objects in a driving environment, including:
an obtaining unit configured to obtain first environmental information and second environmental information, where the first environmental information and the second environmental information are acquired by different sensors;
a lane determination unit configured to determine, based on the first environmental information, information about a first lane of a first traffic object in the first environmental information, and determine, based on the second environmental information, information about a second lane of a second traffic object in the second environmental information; and
an association unit configured to determine, based on information about the first traffic object in the first environmental information, information about the second traffic object in the second environmental information, the information about the first lane, and the information about the second lane, whether the first traffic object and the second traffic object have an association relationship, where the first traffic object and the second traffic object having the association relationship are a same traffic object.

According to a third aspect of the present disclosure, a computer program product is provided, the computer program product includes
instructions which, when the program is executed by a computer, cause the computer to carry out:
obtaining first environmental information and second environmental information, wherein the first environmental information and the second environmental information are acquired by different sensors;
determining, based on the first environmental information, information about a first lane of a first traffic object in the first environmental information, and determining, based on the second environmental information, information about a second lane of a second traffic object in the second environmental information; and
determining, based on information about the first traffic object in the first environmental information, information about the second traffic object in the second environmental information, the information about the first lane, and the information about the second lane, whether the first traffic object and the second traffic object have an association relationship, wherein the first traffic object and the second traffic object having the association relationship are a same traffic obj ect.

According to a fourth aspect of the present disclosure, a computer-readable storage medium is provided, the computer-readable storage medium includes instructions which, when executed by a computer, cause the computer to carry out:
obtaining first environmental information and second environmental information, wherein the first environmental information and the second environmental information are acquired by different sensors;
determining, based on the first environmental information, information about a first lane of a first traffic object in the first environmental information, and determining, based on the second environmental information, information about a second lane of a second traffic object in the second environmental information; and
determining, based on information about the first traffic object in the first environmental information, information about the second traffic object in the second environmental information, the information about the first lane, and the information about the second lane, whether the first traffic object and the second traffic object have an association relationship, wherein the first traffic object and the second traffic object having the association relationship are a same traffic obj ect..

According to the fusion and association method and apparatus for traffic objects in a driving environment, and the edge computing device that are provided by the present disclosure, whether the traffic objects have an association relationship can be determined based on information about lanes of the traffic objects, thereby improving the accuracy of association of the traffic objects.

It should be understood that the content described in this section is not intended to identify critical or important features of the embodiments of the present disclosure, and is not used to limit the scope of the present disclosure either. Other features of the present disclosure will be easily understood through the following description.

### BRIEF DESCRIPTION OF THE DRAWINGS

The accompanying drawings are used to better understand the solutions, and do not constitute a limitation on the present disclosure. In the accompanying drawings:
FIG. 1 is a diagram of a road environment according to an exemplary embodiment;
FIG. 2 is a schematic flowchart of a fusion and association method for traffic objects in a driving environment according to an exemplary embodiment of the present disclosure;
FIG. 3 is a flowchart of a fusion and association method for traffic objects in a driving environment according to another exemplary embodiment of the present disclosure;
FIG. 4 is a diagram of a road scenario according to a first exemplary embodiment of the present disclosure;
FIG. 5 is a diagram of a road scenario according to a second exemplary embodiment of the present disclosure;
FIG. 6 is a flowchart of a fusion and association method for traffic objects in a driving environment according to still another exemplary embodiment of the present disclosure;
FIG. 7 is a schematic structural diagram of a fusion and association apparatus for traffic objects in a driving environment according to an exemplary embodiment of the present disclosure;
FIG. 8 is a schematic structural diagram of a fusion and association apparatus for traffic objects in a driving environment according to another exemplary embodiment of the present disclosure; and
FIG. 9 is a block diagram of an electronic device for implementing a method according to an embodiment of the present disclosure.

### DETAILED DESCRIPTION OF EMBODIMENTS

Exemplary embodiments of the present disclosure are described below with reference to the accompanying drawings, where various details of the embodiments of the present disclosure are included for a better understanding, and should be considered as merely exemplary. Therefore, those of ordinary skill in the art should be aware that various changes and modifications can be made to the embodiments described herein, without departing from the scope and spirit of the present disclosure. Likewise, for clarity and conciseness, the description of well-known functions and structures is omitted in the following description.

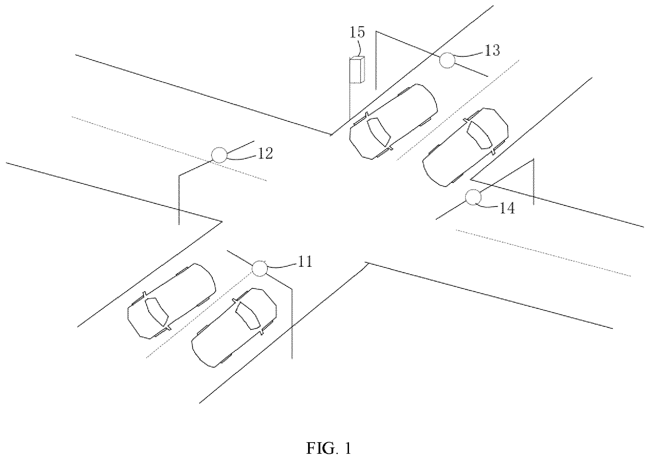

FIG. 1 is a diagram of a road environment according to an exemplary embodiment.

As shown in FIG. 1, there are a plurality of vehicles traveling at an intersection, and a roadside device and sensors may be provided at the intersection to identify the road conditions at the intersection.

For example, a sensor 11, a sensor 12, a sensor 13, and a sensor 14 are provided at the intersection, and environmental information of the intersection can be acquired from different directions using these four sensors. The sensors may send the acquired environmental information to a roadside device 15, and the roadside device 15 may fuse the received environmental information to obtain the road conditions of the intersection.

To fuse the environmental information, the roadside device needs to associate traffic objects in the environmental information. For example, if a first piece of environmental information includes a vehicle A, and a second piece of environmental information includes a vehicle B, the roadside device needs to determine, based on information about the vehicle A and information about the vehicle B, whether the vehicle A and the vehicle B are the same vehicle. If the vehicle A and the vehicle B are the same vehicle, the roadside device may associate the two vehicles.

In the prior art, to associate traffic objects in different environmental information, the roadside device usually calculates horizontal and vertical Euclidean distances or Mahalanobis distances between a target object and an object to be associated. When the horizontal and vertical Euclidean distance or Mahalanobis distance between the target object and the object to be associated satisfies a preset condition, the target object is associated with the object to be associated.

However, the road environment is relatively complex, and traffic objects may be relatively close to each other, or a traffic object may be blocked when environmental information is acquired from a specific angle. Therefore, misassociation easily occurs when the traffic objects in the environmental information acquired by different sensors are associated only based on the Euclidean distance or the Mahalanobis distance.

In the solution provided by the present disclosure, lanes of the traffic objects are further determined, and the information about the lanes to which the traffic objects belong is added for association, so as to more accurately associate the traffic objects.

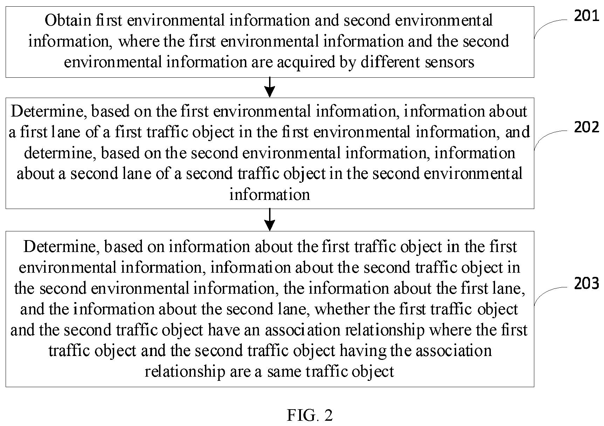

FIG. 2 is a schematic flowchart of a fusion and association method for traffic objects in a driving environment according to an exemplary embodiment of the present disclosure.

As shown in FIG. 2, the fusion and association method for traffic objects in a driving environment provided by the present disclosure includes the following steps.

Step 201: Obtain first environmental information and second environmental information, where the first environmental information and the second environmental information are acquired by different sensors.

The method provided by the present disclosure may be performed by an electronic device having a computing capability. The electronic device may be, for example, a roadside device or a vehicle-mounted device. For example, sensors provided on the roadside may acquire environmental information of a road, and send the environmental information to the roadside device; and the roadside device may associate objects based on the environmental information sent by the sensors, so as to restore the complete road conditions of the road. The sensors may also send the acquired environmental information to a nearby vehicle, so that a vehicle-mounted device of the vehicle can associate objects based on the environmental information sent by the sensors, so as to restore the complete road conditions of the road.

Specifically, if a plurality of sensors for acquiring environmental information are provided, each sensor may send environmental information to the electronic device, and the electronic device may associate traffic objects based on any two pieces of environmental information.

Further, the electronic device may obtain the first environmental information and the second environmental information. For example, a first sensor and a second sensor may respectively send the first environmental information and the second environmental information to the electronic device.

The first environmental information and the second environmental information are acquired by different sensors, which are provided at different locations. Therefore, the different sensors acquire the environmental information from different angles. Traffic objects that are actually the same object need to be determined from the environmental information. For example, the first environmental information includes a vehicle, and the second environmental information also includes a vehicle; then it may be determined whether the two vehicles are actually the same vehicle. If the two vehicles have actually acquired information about the same vehicle, the two vehicles may be associated.

Step 202: Determine, based on the first environmental information, information about a first lane of a first traffic object in the first environmental information, and determine, based on the second environmental information, information about a second lane of a second traffic object in the second environmental information.

In practical application, the first environmental information includes the first traffic object, which may be, for example, a vehicle. The electronic device may determine the information about the first lane of the first traffic object based on the first environmental information, for example, the first traffic object is in a lane L1.

In an optional implementation, the electronic device may be provided with a high-precision map; and the electronic device may identify the first traffic object in the first environmental information, and determine the first lane information of the first traffic object.

For example, if the first environmental information is an image acquired by a camera, the electronic device may identify a vehicle in the image through image recognition, and determine information about a first lane of the vehicle based on the high-precision map. If the second environmental information is point cloud data acquired by a radar, the electronic device may process the point cloud to identify a vehicle on the road, and determine information about a second lane of the vehicle based on the high-precision map.

Step 203: Determine, based on information about the first traffic object in the first environmental information, information about the second traffic object in the second environmental information, the information about the first lane, and the information about the second lane, whether the first traffic object and the second traffic object have an association relationship where the first traffic object and the second traffic object having the association relationship are a same traffic object.

The information about the first traffic object may be determined in the first environmental information. For example, a location of the first traffic object (e.g., locations of a plurality of key points of the first traffic object) may be determined. The information about the second traffic object may be determined in the second environmental information in the same way.

Specifically, whether the first traffic object and the second traffic object have the association relationship may be determined based on the information about the first traffic object, the information about the second traffic object in the second environmental information, the information about the first lane, and the information about the second lane. The accuracy of association of traffic objects can be improved by means of the information about the first lane and the information about the second lane.

Further, a similarity probability for the first traffic object and the second traffic object may be determined based on the information about the first traffic object and the information about the second traffic object. For example, the similarity probability for the first traffic object and the second traffic object may be determined based on a Euclidean distance or a Mahalanobis distance.

In practical application, whether the first traffic object and the second traffic object have the association relationship may be determined based on the information about the first lane of the first traffic object and the information about the second lane of the second traffic object. For example, the similarity probability may be corrected by using the information about the first lane and the information about the second lane to obtain an association probability, and then whether there the first traffic object and the second traffic object have the association relationship may be determined based on the association probability. For example, if the first traffic object and the second traffic object are in the same lane, a value of the similarity probability may be increased to obtain the association probability; and if the first traffic object and the second traffic object are in different lanes, the value of the similarity probability may be decreased to obtain the association probability.

Misassociation easily occurs when whether there is an association relationship between traffic objects is determined based on the Euclidean distance or the Mahalanobis distance. Therefore, based on information of about the lane the traffic objects, the accuracy of fusion and association of the traffic objects can be improved.

If it is determined that two traffic objects have an association relationship, it may be considered that the two traffic objects are the same traffic object. In this way, a complete road environment can be restored based on the road environmental information acquired by the plurality of sensors from a plurality of angles. Specifically, the traffic objects in the environmental information can be associated, and the road environment can be restored based on an association result.

The fusion and association method for traffic objects in a driving environment provided by the present disclosure includes: obtaining first environmental information and second environmental information, where the first environmental information and the second environmental information are acquired by different sensors; determining, based on the first environmental information, information about the first lane of a first traffic object in the first environmental information, and determining, based on the second environmental information, information about the second lane of a second traffic object in the second environmental information; and determining, based on information about the first traffic object in the first environmental information, information about the second traffic object in the second environmental information, the information about the first lane, and the information about the first lane, whether the first traffic object and the second traffic object have the association relationship, where the first traffic object and the second traffic object having an association relationship are the same traffic object. According to the solution provided by the present disclosure, whether the traffic objects have an association relationship can be determined based on information about lanes of the traffic objects, thereby improving the accuracy of fusion and association of the traffic objects.

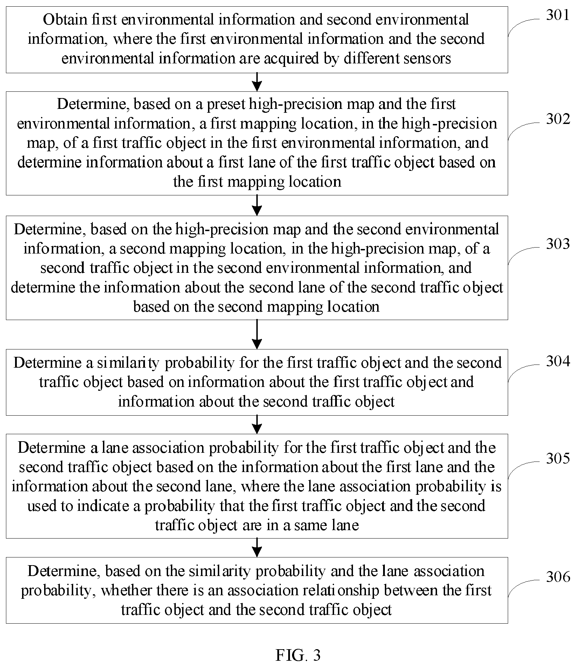

FIG. 3 is a flowchart of a fusion and association method for traffic objects in a driving environment according to another exemplary embodiment of the present disclosure.

As shown in FIG. 3, the fusion and association method for traffic objects in a driving environment provided by the present disclosure includes the following steps.

Step 301: Obtain first environmental information and second environmental information, where the first environmental information and the second environmental information are acquired by different sensors.

An implementation of step 301 is similar to that of step 201, and details are not described herein again.

Step 302: Determine, based on a preset high-precision map and the first environmental information, a first mapping location, in the high-precision map, of a first traffic object in the first environmental information, and determine information about a first lane of the first traffic object based on the first mapping location.

The electronic device may be provided with a high-precision map, and the high-precision map includes precise road information, which can be accurate to the lane level.

Specifically, the electronic device may identify the first traffic object in the first environmental information, for example, may identify a vehicle in the first environmental information. Then, the first mapping location of the first traffic object is determined in the high-precision map.

Further, a map area corresponding to the first environmental information may be determined in the preset high-precision map based on a road environment, a fixed object, etc. included in the first environmental information. For example, if it can be determined based on the high-precision map that the first environmental information is information about an intersection A, the first environmental information can be mapped to the high-precision map, so that the first mapping location of the first traffic object in the high-precision map can be determined based on a location of the first traffic object in the first environmental information.

In practical application, after the first mapping location of the first traffic object in the high-precision map is determined, the information about the first lane of the first traffic object can be obtained based on a lane to which the first mapping location belongs.

Step 303: Determine, based on the high-precision map and the second environmental information, a second mapping location, in the high-precision map, of a second traffic object in the second environmental information, and determine the information about the second lane of the second traffic object based on the second mapping location.

A specific implementation of step 303 is similar to that of step 302, and details are not described herein again.

In this way, information about lanes of the traffic objects can be determined based on the high-precision map, so as to obtain accurate information about the lanes of the traffic objects. Further, whether the traffic objects have the association relationship can be determined based on the information about the traffic objects and the information about the lanes of the traffic objects, so as to improve the accuracy of fusion and association of the traffic objects.

Step 304: Determine a similarity probability for the first traffic object and the second traffic object based on information about the first traffic object and information about the second traffic object.

The electronic device may determine the similarity probability for the first traffic object and the second traffic object based on the information about the first traffic object and the information about the second traffic object. For example, the similarity probability for the first traffic object and the second traffic object may be determined according to a solution in the prior art.

Specifically, the electronic device may determine a Euclidean distance or a Mahalanobis distance between the first traffic object and the second traffic object, and determine the similarity probability for the first traffic object and the second traffic object. The similarity probability indicates a probability that the first traffic object and the second traffic object are the same traffic obj ect.

Further, the similarity probability determined in this way is determined based on the information about the first traffic object and the second traffic object.

In practical application, a distance between the first traffic object and the second traffic object is determined based on the information about the first traffic object and the information about the second traffic object, and the similarity probability for the first traffic object and the second traffic object is determined based on the distance. If the distance between the first traffic object and the second traffic object is relatively small, a relatively high similarity probability may be determined; and if the distance between the first traffic object and the second traffic object is relatively large, a relatively low similarity probability may be determined.

During data association processing on spatio-temporal synchronization target object information using a data association algorithm, the Mahalanobis distance can be used to measure a deviation between the first traffic object and the second traffic object, which is specifically determined by measuring a similarity of the distribution of two state vectors.

In this implementation, the similarity probability for the first traffic object and the second traffic object is obtained by calculating the distance between the two traffic objects, and a relatively accurate similarity probability can be obtained.

Step 305: Determine a lane association probability for the first traffic object and the second traffic object based on the information about the first lane and the information about the second lane, where the lane association probability indicates a probability that the first traffic object and the second traffic object are in a same lane.

In practical application, a relationship between lanes of the first traffic object and the second traffic object may be determined based on the information about the first lane and the information about the second lane. For example, the relationship may be that the lanes are the same lane, or lanes going in the same direction, or other cases.

A correspondence between the lane relationship and the lane association probability is preset. For example, if the first lane and the second lane are the same lane, the lane association probability is 1; and if the first lane and the second lane are lanes going in opposite directions, the lane association probability is 0.

Specifically, the lane association probability indicates a probability that the first traffic object and the second traffic object are in the same lane. If the first traffic object and the second traffic object are in the same lane, there is a relatively high probability that the two traffic objects are the same traffic object. If the first traffic object and the second traffic object are in the lanes going in the opposite directions, there is a relatively low probability that the two traffic objects are the same traffic object.

Further, if the information about the first lane and the information about the second lane indicate that the first lane and the second lane are the same lane, it is determined that the lane association probability is a first preset value; if the information about the first lane and the information about the second lane indicate that the first lane and the second lane are adjacent lanes going in the same direction, it is determined that the lane association probability is a second preset value; otherwise, it is determined that the lane association probability is a third preset value, where the first preset value is greater than the second preset value, and the second preset value is greater than the third preset value.

In practical application, if the first lane and the second lane are the same lane, it indicates that the first traffic object and the second traffic object are in the same lane, and that there is a relatively high probability that the first traffic object and the second traffic object are the same traffic object; if the first lane and the second lane are adjacent lanes going in the same direction, it indicates that there is a relatively high probability that the first traffic object and the second traffic object are the same traffic object; otherwise, it indicates that there is a relatively low probability that the first traffic object and the second traffic object are the same traffic object.

In an optional implementation, the first preset value may be 1, the second preset value may be 0.5, and the third preset value may be 0. These three preset values may be set as required.

In this implementation, the lane association probability for the traffic objects can be determined based on the lanes of the traffic objects, and then the similarity probability for the traffic objects can be corrected by using the lane association probability, so as to more accurately associate the traffic objects.

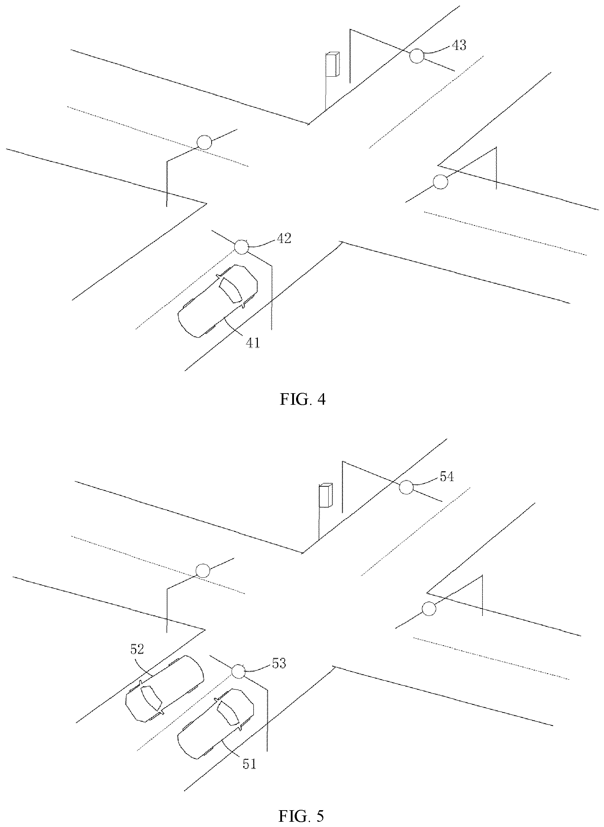

FIG. 4 is a diagram of a road scenario according to a first exemplary embodiment of the present disclosure.

As shown in FIG. 4, there is a vehicle 41 on a road. For example, environmental information acquired by a sensor 42 includes information about a first vehicle, where the information about the first vehicle is information about the vehicle 41; and environmental information acquired by a sensor 43 includes information about a second vehicle, where the information about the second vehicle is also the information about the vehicle 41. It can be determined that the first vehicle and the second vehicle are in a same lane. Therefore, a lane association probability for the first vehicle and the second vehicle may be set to the first preset value, for example, may be set to 1.

FIG. 5 is a diagram of a road scenario according to a second exemplary embodiment of the present disclosure.

As shown in FIG. 5, there are vehicles 51 and 52 on a road. For example, environmental information acquired by a sensor 53 includes information about a first vehicle, where the information about the first vehicle is information about the vehicle 51; and environmental information acquired by a sensor 54 includes information about a second vehicle, where the information about the second vehicle is information about the vehicle 52. Lanes of the first vehicle and the second vehicle are different and go in opposite traveling directions. Therefore, a lane association probability for the first vehicle and the second vehicle may be set to the third preset value, for example, may be set to 0.

It can be learned from the above illustration that, based on the solution provided by the present disclosure, if lanes of traffic objects in different environmental information are different, a relatively low lane association probability may be set, and then a similarity probability for the traffic objects may be corrected based on the lane association probability, so that a relatively low association probability can be obtained, to avoid misassociating the two traffic objects.

Step 306: Determine, based on the similarity probability and the lane association probability, whether there is an association relationship between the first traffic object and the second traffic object.

Further, the electronic device may determine, based on the similarity probability and the lane association probability, whether the first traffic object and the second traffic object have the association relationship. Specifically, the similarity probability may be corrected by using the lane association probability, to obtain an association probability for the first traffic object and the second traffic object; and if the association probability satisfies a specific condition, it may be determined that there is an association relationship between the first traffic object and the second traffic object.

In this implementation, the lane association probability can reflect the probability that the two traffic objects are the same traffic object, and then the similarity probability for the traffic objects may be corrected by using the lane association probability, thereby improving the accuracy of an association result of the traffic objects.

In practical application, a product of the similarity probability and the lane association probability may be determined as the association probability for the first traffic object and the second traffic object. Alternatively, a sum of the similarity probability and the lane association probability may be determined as the association probability for the first traffic object and the second traffic object. Alternatively, a similarity probability weighted value of the similarity probability may be determined by using a preset first weight, a lane association probability weighted value of the lane association probability may be determined by using a preset second weight, and a sum of the similarity probability weighted value and the lane association probability weighted value may be determined as the association probability for the first traffic object and the second traffic object.

If the determined association probability is greater than a probability threshold, it is determined that there is an association relationship between the first traffic object and the second traffic object. For example, the probability threshold may be set as required. The electronic device may correct the similarity probability by using the lane association probability for the traffic objects, to obtain the association probability; and when the association probability is greater than the probability threshold, may determine that the traffic objects have the association relationship.

In this implementation, the traffic objects can be associated by the electronic device based on the lanes of the traffic objects, thereby improving the accuracy of an association result of the traffic objects.

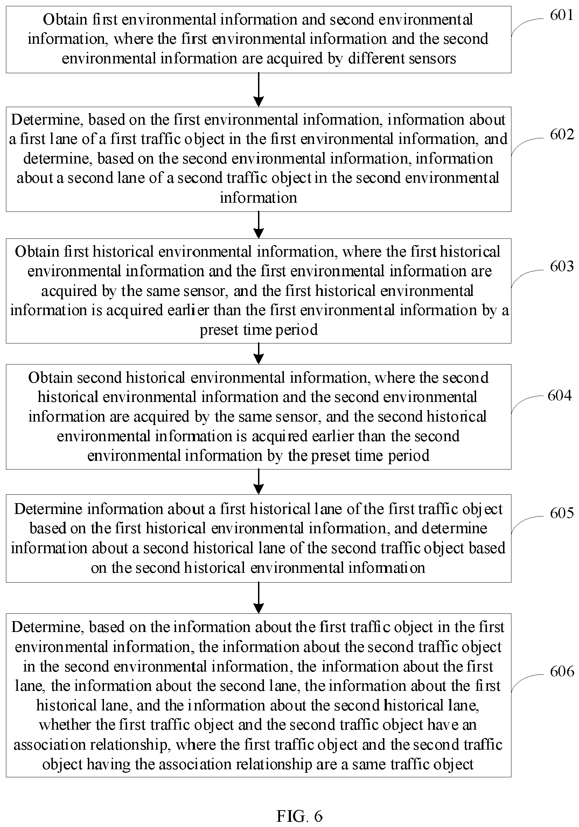

FIG. 6 is a flowchart of a fusion and association method for traffic objects in a driving environment according to still another exemplary embodiment of the present disclosure.

As shown in FIG. 6, the fusion and association method for traffic objects in a driving environment provided by the present disclosure includes the following steps.

Step 601: Obtain first environmental information and second environmental information, where the first environmental information and the second environmental information are acquired by different sensors.

Step 602: Determine, based on the first environmental information, information about a first lane of a first traffic object in the first environmental information, and determine, based on the second environmental information, information about a second lane of a second traffic object in the second environmental information.

Specific implementations of steps 601 and 602 are similar to the related content in the embodiments shown in FIG. 2 and FIG. 3, and details are not described herein again.

Step 603: Obtain first historical environmental information, where the first historical environmental information and the first environmental information are acquired by the same sensor, and the first historical environmental information is acquired earlier than the first environmental information by a preset time period.

Step 604: Obtain second historical environmental information, where the second historical environmental information and the second environmental information are acquired by the same sensor, and the second historical environmental information is acquired earlier than the second environmental information by the preset time period.

The electronic device may further obtain the first historical environmental information, and the first historical environmental information and the first environmental information are acquired by the same sensor. For example, the first environmental information and the first historical environmental information are acquired by a same radar sensor.

Specifically, the electronic device may further obtain the second historical environmental information, and the second historical environmental information and the second environmental information are acquired by the same sensor. For example, the second environmental information and the second historical environmental information are acquired by a same radar sensor.

Further, the first historical environmental information is acquired earlier than the first environmental information by a preset time period, and the second historical environmental information is acquired earlier than the second environmental information by the preset time period. For example, the first historical environmental information is one frame of data acquired by a first sensor, and the first environmental information is a next frame of data acquired by the first sensor. The same is true for the second historical environmental information and the second environmental information, and details are not described herein again.

In practical application, the preset time period may be set as required. For example, the historical environmental information and the environmental information may be separated by several frames, or may be adjacent frames.

The obtained historical environmental information may also be a plurality of frames of data, for example, may be a plurality of frames of data acquired within the preset period before the environmental information. For example, n frames of first historical environmental information acquired before the first environmental information may be obtained, and n frames of second historical environmental information acquired before the second environmental information may also be obtained.

Step 605: Determine information about a first historical lane of the first traffic object based on the first historical environmental information, and determine information about a second historical lane of the second traffic object based on the second historical environmental information.

The electronic device may determine a historical lane of the first traffic object based on the first historical environmental information, for example, may determine the information about the first historical lane of the first traffic object within the preset time period before the first environmental information is acquired.

Specifically, the electronic device may determine a historical lane of the second traffic object based on the second historical environmental information, for example, may determine the information about the second historical lane of the second traffic object within the preset time period before the second environmental information is acquired.

Further, the acquired information about the historical lane may be associated with time information, or with a frame identifier of the historical environmental information, and then the information about the first historical lane and the information about the second historical lane having a correspondence can be determined based on the time or the frame identifier, so that a first historical lane and a second historical lane can be compared.

Step 606: Determine, based on the information about the first traffic object in the first environmental information, the information about the second traffic object in the second environmental information, the information about the first lane, the information about the second lane, the information about the first historical lane, and the information about the second historical lane, whether the first traffic object and the second traffic object have an association relationship, where the first traffic object and the second traffic object having the association relationship are a same traffic object.

Further, when associating the traffic objects, the electronic device may combine the first traffic object with the second traffic object based on the information about the first traffic object, the information about the second traffic object in the second environmental information, the information about the first lane, the information about the second lane, the information about the first historical lane, and the information about the second historical lane.

In practical application, a relationship between lanes of the first traffic object and the second traffic object may be determined based on the information about the first lane and the information about the second lane. For example, the relationship may be that the lanes are the same lane, or lanes going in the same direction, or other cases. Further, a relationship between the historical lanes of the first traffic object and the second traffic object may be determined based on the information about the first historical lane and the information about the second historical lane.

In this implementation, whether the traffic objects are to be associated is determined based on historical traffic information of the traffic objects, so that the traffic objects can be more accurately associated, thereby reducing a probability of misassociation.

Specifically, a similarity probability for the first traffic object and the second traffic object may be determined based on the information about the first traffic object and the information about the second traffic object. The means for determining the similarity probability is similar to the implementation of step 304, and details are not described herein again.

Further, a lane association probability for the first traffic object and the second traffic object may be determined based on the information about the first lane, the information about the second lane, the information about the first historical lane, and the information about the second historical lane.

In practical application, a correspondence between the lane relationship and the lane association probability is preset. For example, if the first lane and the second lane are the same lane, and the first historical lane and the second historical lane are also the same lane, the lane association probability is 1.

Specifically, the lane association probability indicates a probability that the first traffic object and the second traffic object are in the same lane. If the first traffic object and the second traffic object are in the same lane at a plurality of moments, there is a relatively high probability that the two traffic objects are the same traffic object. If the first traffic object and the second traffic object are in different lanes, there is a relatively low probability that the two traffic objects are the same traffic object.

Further, if the information about the first historical lane and the information about the second historical lane indicate that the historical first lane and the second historical lane are the same lane, and the information about the first lane and the information about the second lane indicate that the first lane and the second lane are the same lane, it is determined that the lane association probability is a fourth preset value; if the information about the first historical lane and the information about the second historical lane indicate that the first historical lane and the second historical lane are the same lane, and the information about the first lane and the information about the second lane indicate that the first lane and the second lane are different lanes, or the information about the first historical lane and the information about the second historical lane indicate that the historical first lane and the second historical lane are different lanes, and the information about the first lane and the information about the second lane indicate the first lane and the second lane are the same lane, it is determined that the lane association probability is a fifth preset value; otherwise, it is determined that the lane association probability is a sixth preset value, wherein the fourth preset value is greater than the fifth preset value, and the fifth preset value is greater than the sixth preset value.

In practical application, if the first traffic object and the second traffic object are always in the same lane, it indicates that there is a relatively high probability that the two traffic objects are the same traffic object; if the first traffic object and the second traffic object are historically in the same lane, it indicates that there is a relatively high probability that the first traffic object and the second traffic object are the same traffic object; otherwise, it indicates that there is a relatively low probability that the first traffic object and the second traffic object are the same traffic object.

In an optional implementation, the fourth preset value may be 1, the fifth preset value may be 0.5, and the sixth preset value may be 0. These three preset values may be set as required.

In this implementation, the lane association probability for the traffic objects can be determined based on the lanes and the historical lanes of the traffic objects, and then the similarity probability for the traffic objects can be corrected by using the lane association probability, so that the traffic objects may be associated more accurately .

Whether the first traffic object and the second traffic object have an association relationship is determined based on the similarity probability and the lane association probability for the first traffic object and the second traffic object. A specific implementation is similar to that of step 306, and details are not described herein again.

In this implementation, the traffic objects can be associated by the electronic device based on the lanes and the historical lanes of the traffic objects, thereby the accuracy of an association result of the traffic objects may be improved.

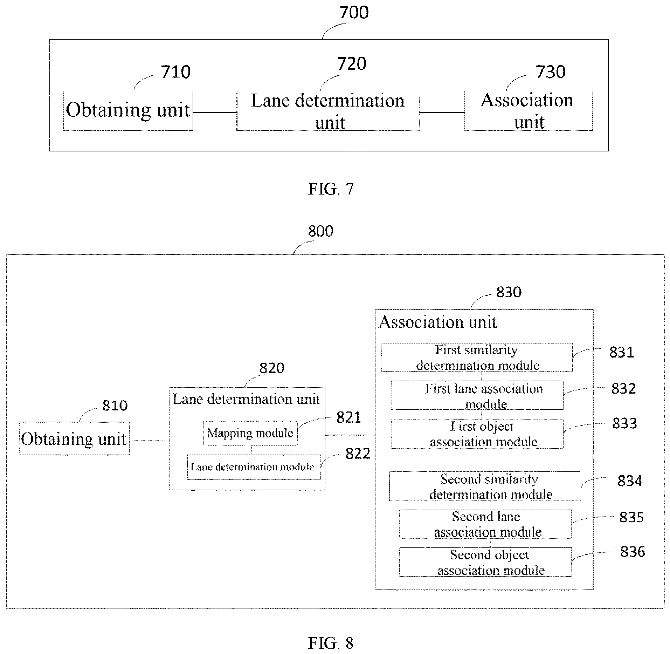

FIG. 7 is a schematic structural diagram of a fusion and association apparatus for traffic objects in a driving environment according to an exemplary embodiment of the present disclosure.

As shown in FIG. 7, the fusion and association apparatus 700 for traffic objects in a driving environment provided by the present disclosure includes:
an obtaining unit 710 configured to obtain first environmental information and second environmental information, where the first environmental information and the second environmental information are acquired by different sensors;
a lane determination unit 720 configured to determine, based on the first environmental information, information about a first lane of a first traffic object in the first environmental information, and determine, based on the second environmental information, information about a second lane of a second traffic object in the second environmental information; and
an association unit 730 configured to determine, based on information about the first traffic object in the first environmental information, information about the second traffic object in the second environmental information, the information about the first lane, and the information about the second lane, whether the first traffic object and the second traffic object have an association relationship, where the first traffic object and the second traffic object having an association relationship are the same traffic object.

According to the fusion and association apparatus for traffic objects in a driving environment provided by the present disclosure, whether the traffic objects have an association relationship can be determined based on information about lanes of the traffic objects, thereby improving the accuracy of fusion and association of the traffic objects.

FIG. 8 is a schematic structural diagram of a fusion and association apparatus for traffic objects in a driving environment according to another exemplary embodiment of the present disclosure.

As shown in FIG. 8, in the fusion and association apparatus 800 for traffic objects in a driving environment provided by the present disclosure, an obtaining unit 810 is similar to the obtaining unit 710 in FIG. 7, a lane determination unit 820 is similar to the lane determination unit 720 in FIG. 7, and an association unit 830 is similar to the association unit 730 in FIG. 7.

Optionally, the lane determination unit 820 includes:
a mapping module 821 configured to determine, based on a preset high-precision map and the first environmental information, a first mapping location, in the high-precision map, of the first traffic object in the first environmental information; and
a lane determination module 822 configured to determine the information about the first lane of the first traffic object based on the first mapping location.

The mapping module 821 is further configured to determine, based on the high-precision map and the second environmental information, a second mapping location, in the high-precision map, of the second traffic object in the second environmental information.

The lane determination module 822 is further configured to determine the information about the second lane of the second traffic object based on the second mapping location.

Optionally, the association unit 830 includes:
a first similarity determination module 831 configured to determine a similarity probability for the first traffic object and the second traffic object based on the information about the first traffic object and the information about the second traffic object;
a first lane association module 832 configured to determine a lane association probability for the first traffic object and the second traffic object based on the information about the first lane and the information about the second lane, where the lane association probability indicates a probability that the first traffic object and the second traffic object are in a same lane; and
a first object association module 833 configured to determine, based on the similarity probability and the lane association probability, whether there is an association relationship between the first traffic object and the second traffic object.

Optionally, the first similarity determination module 831 is specifically configured to:
determine a distance between the first traffic object and the second traffic object based on the information about the first traffic object and the information about the second traffic object, and determine the similarity probability for the first traffic object and the second traffic object based on the distance.

Optionally, the first lane association module 832 is specifically configured to:
in response to determining the information about the first lane and the information about the second lane indicate that the first lane and the second lane are the same lane, determine that the lane association probability is a first preset value;
in response to determining the information about the first lane and the information about the second lane indicate that the first lane and the second lane are adjacent lanes going in the same direction, determine that the lane association probability is a second preset value;
in response to determining the information about the first lane and the information about the second lane indicate that the first lane and the second lane are two nonadjacent lanes, determine that the lane association probability is a third preset value, where the first preset value is greater than the second preset value, and the second preset value is greater than the third preset value.

Optionally, the first object association module 833 is specifically configured to:
determine a product of the similarity probability and the lane association probability as an association probability for the first traffic object and the second traffic object; or determine a sum of the similarity probability and the lane association probability as the association probability for the first traffic object and the second traffic object; or determine a similarity probability weighted value of the similarity probability by using a preset first weight, determine a lane association probability weighted value of the lane association probability by using a preset second weight, and determine a sum of the similarity probability weighted value and the lane association probability weighted value as the association probability for the first traffic object and the second traffic object; and
in response to determining the association probability is greater than a probability threshold, determine the first traffic object and the second traffic object have the association relationship.

Optionally, the obtaining unit 810 is further configured to obtain first historical environmental information, where the first historical environmental information and the first environmental information are acquired by the same sensor, and the first historical environmental information is acquired earlier than the first environmental information by a preset time period.

The obtaining unit 810 is further configured to obtain second historical environmental information, where the second historical environmental information and the second environmental information are acquired by the same sensor, and the second historical environmental information is acquired earlier than the second environmental information by the preset time period.

The lane determination unit 820 is further configured to determine information about a first historical lane of the first traffic object based on the first historical environmental information, and determine information about a second historical lane of the second traffic object based on the second historical environmental information.

The association unit 830 is further configured to
determine, based on the information about the first traffic object in the first environmental information, the information about the second traffic object in the second environmental information, the information about the first lane, the information about the second lane, the information about the first historical lane, and the information about the second historical lane, whether there is an association relationship between the first traffic object and the second traffic object.

Optionally, the association unit 830 includes:
a second similarity determination module 834 configured to determine the similarity probability for the first traffic object and the second traffic object based on the information about the first traffic object and the information about the second traffic object;
a second lane association module 835 configured to determine the lane association probability for the first traffic object and the second traffic object based on the information about the first lane, the information about the second lane, the information about the first historical lane, and the information about the second historical lane; and
a second object association module 836 configured to determine, based on the similarity probability and the lane association probability for the first traffic object and the second traffic object, whether the first traffic object and the second traffic object have the association relationship.

Optionally, the second lane association module 835 is specifically configured to:
in response to determining the information about the first historical lane and the information about the second historical lane indicate that the first historical lane and the second historical lane are the same lane, and the information about the first lane and the information about the second lane indicate that the first lane and the second lane are the same lane, determine that the lane association probability is a fourth preset value;
in response to determining the information about the first historical lane and the information about the second historical lane indicate that the first historical lane and the second historical lane are the same lane, and the information about the first lane and the information about the second lane indicate that the first lane and the second lane are different lanes, or the information about the first historical lane and the information about the second historical lane indicate that the first historical lane and the second historical lane are different lanes, and the information about the first lane and the information about the second lane indicate the first lane and the second lane are the same lane, determine that the lane association probability is a fifth preset value;
in response to determining the information about the first historical lane and the information about the second historical lane indicate that the historical first lane and the second historical lane are different lanes, and the information about the first lane and the information about the second lane indicate the first lane and the second lane are different lanes, determine that the lane association probability is a sixth preset value, wherein the fourth preset value is greater than the fifth preset value, and the fifth preset value is greater than the sixth preset value.

The present disclosure provides a fusion and association method and apparatus for traffic objects in a driving environment, and an edge computing device, which are applied to intelligent transportation technologies and autonomous driving technologies in computer technology to solve the problem of object misassociation that easily occurs in the prior art.

In the technical solutions of the present disclosure, collection, storage, use, processing, transmission, provision, disclosure, etc. of user personal information involved all comply with related laws and regulations and are not against the public order and good morals.

According to an embodiment of the present disclosure, the present disclosure further provides an electronic device, a readable storage medium, and a computer program product.

According to an embodiment of the present disclosure, the present disclosure further provides a computer program product. The computer program product includes: a computer program, which is stored in a readable storage medium, where at least one processor of an electronic device may read the computer program from the readable storage medium, and the at least one processor executes the computer program to cause the electronic device to perform the solution provided in any one of the foregoing embodiments.

According to an embodiment of the present disclosure, the present disclosure further provides an edge computing device. The edge computing device includes an electronic device as described below.

Optionally, the edge computing device may be a roadside device, a roadside computing device, a roadside computing unit (RSCU), etc.

Optionally, in addition to the electronic device, the edge computing device may also include a communication component and the like. The electronic device may be integrated with or provided separately from the communication component. The electronic device may obtain data, such as a picture and a video, from a sensing device (such as a roadside camera), so as to perform image and video processing and data computing, and then transmit processing and computing results to a cloud control platform via the communication component. Optionally, the electronic device itself may also have a sensing data obtaining function and a communication function. For example, the electronic device is an AI camera, and may directly perform image and video processing and data computing based on the obtained sensing data, and then transmit the processing and computing results to the cloud control platform.

Optionally, the cloud control platform performs processing in the cloud. The electronic device included in the cloud control platform can obtain data such as a picture and a video from the sensing device (such as the roadside camera), so as to perform image and video processing and data computing. The cloud control platform may also be referred to as a vehicle-road collaboration management platform, a V2X platform, a cloud computing platform, a central system, a cloud server, etc.

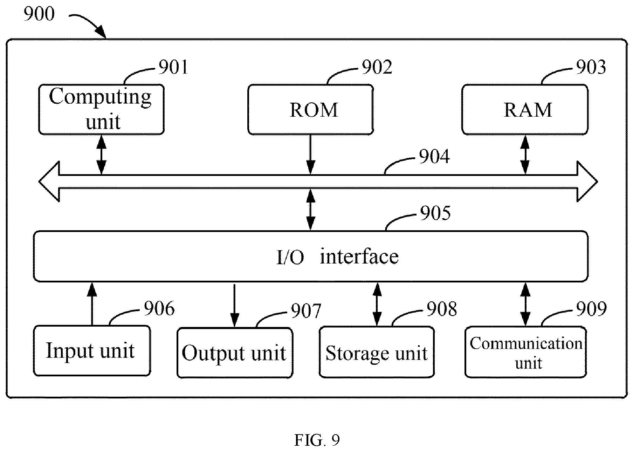

FIG. 9 is a schematic block diagram of an example electronic device 900 that may be used to implement the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 9, the device 900 includes a computing unit 901, which may perform various appropriate actions and processing according to a computer program stored in a read-only memory (ROM) 902 or a computer program loaded from a storage unit 908 to a random access memory (RAM) 903. The RAM 903 may further store various programs and data required for the operation of the device 900. The computing unit 901, the ROM 902, and the RAM 903 are connected to each other through a bus 904. An input/output (I/O) interface 905 is also connected to the bus 904.

A plurality of components in the device 900 are connected to the I/O interface 905, including: an input unit 906, such as a keyboard or a mouse; an output unit 907, such as various types of displays or speakers; a storage unit 908, such as a magnetic disk or an optical disc; and a communication unit 909, such as a network interface card, a modem, or a wireless communication transceiver. The communication unit 909 allows the device 900 to exchange information/data with other devices through a computer network, such as the Internet, and/or various telecommunications networks.

The computing unit 901 may be various general-purpose and/or special-purpose processing components with processing and computing capabilities. Some examples of the computing unit 901 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 901 performs the various methods and processing described above, for example, the fusion and association method for traffic objects in a driving environment. For example, in some embodiments, the fusion and association method for traffic objects in a driving environment may be implemented as a computer software program, which is tangibly contained in a machine-readable medium, such as the storage unit 908. In some embodiments, a part or all of the computer program may be loaded and/or installed onto the device 900 via the ROM 902 and/or the communication unit 909. When the computer program is loaded onto the RAM 903 and executed by the computing unit 901, one or more steps of the fusion and association method for traffic objects in a driving environment described above can be performed. Alternatively, in other embodiments, the computing unit 901 may be configured, by any other suitable means (for example, by means of firmware), to perform the fusion and association method for traffic objects in a driving environment.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logic device (CPLD), computer hardware, firmware, software, and/or a combination thereof. These various implementations may include: the systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, which is also referred to as a cloud computing server or a cloud host, and is a host product in a cloud computing service system for overcoming defects of difficult management and weak business expansion in conventional physical hosts and virtual private server (VPS) services. The server may alternatively be a server in a distributed system, or a server combined with a blockchain.

It should be understood that steps may be reordered, added, or deleted based on the various forms of procedures shown above. For example, the steps recorded in the present disclosure can be performed in parallel, in order, or in a different order, provided that the desired result of the technical solutions disclosed in the present disclosure can be achieved, which is not limited herein.

The specific implementations above do not constitute a limitation on the protection scope of the present disclosure. Those skilled in the art should understand that various modifications, combinations, sub-combinations, and replacements can be made based on design requirements and other factors. Any modifications, equivalent replacements, improvements, etc. within the spirit and principle of the present disclosure shall fall within the protection scope of the present disclosure.

## Claims

1. A fusion and association method for traffic objects in a driving environment, comprising:
obtaining (S201) first environmental information and second environmental information, wherein the first environmental information and the second environmental information are acquired by different sensors;
determining (S202), based on the first environmental information, information about a first lane of a first traffic object in the first environmental information, and determining, based on the second environmental information, information about a second lane of a second traffic object in the second environmental information; and
determining (S203), based on information about the first traffic object in the first environmental information, information about the second traffic object in the second environmental information, the information about the first lane, and the information about the second lane, whether the first traffic object and the second traffic object have an association relationship, wherein the first traffic object and the second traffic object having the association relationship are a same traffic object.

2. The method according to claim 1, wherein the determining, based on the first environmental information, information about a first lane of a first traffic object in the first environmental information, and determining, based on the second environmental information, information about a second lane of a second traffic object in the second environmental information comprises:
determining, based on a preset high-precision map and the first environmental information, a first mapping location, in the high-precision map, of the first traffic object in the first environmental information, and determining the information about the first lane of the first traffic object based on the first mapping location; and
determining, based on the high-precision map and the second environmental information, a second mapping location, in the high-precision map, of the second traffic object in the second environmental information, and determining the information about the second lane of the second traffic object based on the second mapping location.

3. The method according to claim 1 or 2, wherein the determining, based on information about the first traffic object in the first environmental information, information about the second traffic object in the second environmental information, the information about the first lane, and the information about the second lane, whether the first traffic object and the second traffic object have an association relationship comprises:
determining a similarity probability for the first traffic object and the second traffic object based on the information about the first traffic object and the information about the second traffic obj ect;
determining a lane association probability for the first traffic object and the second traffic object based on the information about the first lane and the information about the second lane, wherein the lane association probability indicates a probability that the first traffic object and the second traffic object are in a same lane; and
determining, based on the similarity probability and the lane association probability, whether the first traffic object and the second traffic object have the association relationship.

4. The method according to claim 3, wherein the determining a similarity probability for the first traffic object and the second traffic object based on the information about the first traffic object and the information about the second traffic object comprises:
determining a distance between the first traffic object and the second traffic object based on the information about the first traffic object and the information about the second traffic object, and determining the similarity probability for the first traffic object and the second traffic object based on the distance.

5. The method according to claim 3, wherein the determining a lane association probability for the first traffic object and the second traffic object based on the information about the first lane and the information about the second lane comprises:
in response to determining the information about the first lane and the information about the second lane indicate that the first lane and the second lane are the same lane, determining the lane association probability as a first preset value;
in response to determining the information about the first lane and the information about the second lane indicate that the first lane and the second lane are adjacent lanes going in the same direction, determining the lane association probability as a second preset value;
in response to determining the information about the first lane and the information about the second lane indicate that the first lane and the second lane are two adjacent lanes going in different directions, determining the lane association probability as a third preset value, wherein the first preset value is greater than the second preset value, and the second preset value is greater than the third preset value.

6. The method according to claim 3, wherein the determining, based on the similarity probability and the lane association probability, whether the first traffic object and the second traffic object have the association relationship comprises:
determining a product of the similarity probability and the lane association probability as an association probability for the first traffic object and the second traffic object; or determining a sum of the similarity probability and the lane association probability as the association probability for the first traffic object and the second traffic object; or determining a similarity probability weighted value of the similarity probability by using a preset first weight, determining a lane association probability weighted value of the lane association probability by using a preset second weight, and determining a sum of the similarity probability weighted value and the lane association probability weighted value as the association probability for the first traffic object and the second traffic object; and
in response to determining the association probability is greater than a probability threshold, determining the first traffic object and the second traffic object have the association relationship.

7. The method according to any one of claims 1, 2, or 4 to 6, further comprising:
obtaining first historical environmental information, wherein the first historical environmental information and the first environmental information are acquired by the same sensor, and the first historical environmental information is acquired earlier than the first environmental information by a preset time period;
obtaining second historical environmental information, wherein the second historical environmental information and the second environmental information are acquired by the same sensor, and the second historical environmental information is acquired earlier than the second environmental information by the preset time period; and
determining information about a first historical lane of the first traffic object based on the first historical environmental information, and determining information about a second historical lane of the second traffic object based on the second historical environmental information, wherein
the determining, based on information about the first traffic object in the first environmental information, information about the second traffic object in the second environmental information, the information about the first lane, and the information about the second lane, whether the first traffic object and the second traffic object have the association relationship comprises:
determining, based on the information about the first traffic object in the first environmental information, the information about the second traffic object in the second environmental information, the information about the first lane, the information about the second lane, the information about the first historical lane, and the information about the second historical lane, whether the first traffic object and the second traffic object have an association relationship.

8. The method according to claim 7, wherein the determining, based on the information about the first traffic object in the first environmental information, the information about the second traffic object in the second environmental information, the information about the first lane, the information about the second lane, the information about the first historical lane, and the information about the second historical lane, whether the first traffic object and the second traffic object have the association relationship comprises:
determining the similarity probability for the first traffic object and the second traffic object based on the information about the first traffic object and the information about the second traffic obj ect;
determining the lane association probability for the first traffic object and the second traffic object based on the information about the first lane, the information about the second lane, the information about the first historical lane, and the information about the second historical lane; and
determining, based on the similarity probability and the lane association probability for the first traffic object and the second traffic object, whether the first traffic object and the second traffic object have the association relationship.

9. The method according to claim 8, wherein the determining the lane association probability for the first traffic object and the second traffic object based on the information about the first lane, the information about the second lane, the information about the first historical lane, and the information about the second historical lane comprises:
in response to determining the information about the first historical lane and the information about the second historical lane indicate that the first historical lane and the second historical lane are the same lane, and the first lane information and the second lane information indicate that the first lane and the second lane are the same lane, determining the lane association probability as a fourth preset value;
in response to determining the information about the first historical lane and the information about the second historical lane indicate that the first historical lane and the second historical lane are the same lane, and the information about the first lane and the information about the second lane indicate that the first lane and the second lane are different lanes, or the information about the first historical lane and the information about the second historical lane indicate that the historical first lane and the second historical lane are different lanes, and the information about the first lane and the information about the second lane indicate the first lane and the second lane are the same lane, determining the lane association probability as a fifth preset value;
in response to determining the information about the first historical lane and the information about the second historical lane indicate that the historical first lane and the second historical lane are different lanes, and the information about the first lane and the information about the second lane indicate the first lane and the second lane are different lanes, determining the lane association probability as a sixth preset value, wherein the fourth preset value is greater than the fifth preset value, and the fifth preset value is greater than the sixth preset value.

10. A fusion and association apparatus for traffic objects in a driving environment, comprising:
an obtaining unit configured to obtain first environmental information and second environmental information, wherein the first environmental information and the second environmental information are acquired by different sensors;
a lane determination unit configured to determine, based on the first environmental information, information about a first lane of a first traffic object in the first environmental information, and determine, based on the second environmental information, information about a second lane of a second traffic object in the second environmental information; and
an association unit configured to determine, based on information about the first traffic object in the first environmental information, information about the second traffic object in the second environmental information, the information about the first lane, and the information about the second lane, whether the first traffic object and the second traffic object have an association relationship, wherein the first traffic object and the second traffic object having an association relationship are the same traffic object.

11. The apparatus according to claim 10, wherein the lane determination unit comprises:
a mapping module configured to determine, based on a preset high-precision map and the first environmental information, a first mapping location, in the high-precision map, of the first traffic object in the first environmental information; and
a lane determination module configured to determine the information about the first lane of the first traffic object based on the first mapping location, wherein
the mapping module is further configured to determine, based on the high-precision map and the second environmental information, a second mapping location, in the high-precision map, of the second traffic object in the second environmental information; and
the lane determination module is further configured to determine the information about the second lane of the second traffic object based on the second mapping location.

12. The apparatus according to claim 10 or 11, wherein the association unit comprises:
a first similarity determination module configured to determine a similarity probability for the first traffic object and the second traffic object based on the information about the first traffic object and the information about the second traffic object;
a first lane association module configured to determine a lane association probability for the first traffic object and the second traffic object based on the information about the first lane and the information about the second lane, wherein the lane association probability indicates a probability that the first traffic object and the second traffic object are in a same lane; and
a first object association module configured to determine, based on the similarity probability and the lane association probability, whether the first traffic object and the second traffic object have an association relationship.

13. The apparatus according to claim 12, wherein the first similarity determination module is specifically configured to:
determine a distance between the first traffic object and the second traffic object based on the information about the first traffic object and the information about the second traffic object, and determine the similarity probability for the first traffic object and the second traffic object based on the distance.

14. A computer program product comprising instructions which, when the program is executed by a computer, cause the computer to carry out the method according to any one of claims 1-9.

15. A computer-readable storage medium comprising instructions which, when executed by a computer, cause the computer to carry out the method according to any one of claims 1-9.
